# EUROPEAN PATENT APPLICATION

(11) **EP 4 557 841 A1**
(43) Date of publication of application: **21.05.2025**
(21) Application number: 23839219.5
(22) Date of filing: 02.03.2023
(51) Int. Cl.: H04W 52/28, G06Q 10/0833, H04W 4/35, H04W 4/42, H04W 52/38

(54) **WIRELESS DEVICE AND DISTRIBUTION TRACKING SYSTEM**

(30) Priority: 11.07.2022 JP 2022111370
(71) Applicant: Alps Alpine Co., Ltd., Tokyo 145-8501 (JP)
(72) Inventor: NOMURA, Masatoshi, Tokyo 145-8501 (JP)
(74) Representative: Maiwald GmbH
(86) International application number: PCT/JP2023/007718
(87) International publication number: WO 2024/014039

(57) **Abstract**

Wireless device capable of appropriately switching communication mode by detecting it to be not loaded on airplane, and logistics tracking system are provided. Wireless device is mobile wireless device including: sensor unit for measuring wireless device displacement; transmitter for transmitting signal including wireless device-related information; storage for pre-storing predetermined displacement condition and storing displacement history measured by sensor unit; and controller for controlling transmitter's communication mode based on storage-stored predetermined displacement condition and displacement history. Controller controls transmitter's communication mode to either low output power mode, for restricting signal transmission output power of transmitter to predetermined value or lower, or high output power mode, for increasing signal transmission output power of transmitter to be higher than predetermined value, and when it is definitely determined that wireless device is not loaded on airplane based on predetermined displacement condition and displacement history, sets transmitter's communication mode to high output power mode.

## Description

### TECHNICAL FIELD

The present disclosure relates to a wireless device and a logistics tracking system.

### BACKGROUND ART

There is a wireless device management method for managing a wireless device in an airplane by means of a processor of the device. The method includes the processor shifting the wireless device from a first mode to a second mode, where one of the first mode and the second mode represents a state of the wireless device in which a transmitter of the wireless device stops operating, and the other of the first mode and the second mode represents a state of the wireless device in which the transmitter operates. The method includes: shifting the wireless device from a normal mode to disabled mode upon reception of data indicating a takeoff of the airplane; and shifting the wireless device from the disabled mode to an aerial mode upon reception of data indicating that the airplane has reached a cruising altitude (for example, see PTL 1).

### CITATION LIST

### PATENT LITERATURE

PTL 1: Published Japanese Translation of PCT International Publication No. 2012-523987

### SUMMARY OF THE INVENTION

### TECHNICAL PROBLEM

There is a severe constraint on the communication output power of a wireless device loaded on an airplane so as not to disturb the travelling operations of the airplane. Therefore, in an existing wireless device management method, the mode of the wireless device is changed when the airplane is taking off or has reached the cruising altitude.

However, it is very difficult for a wireless device to detect at an appropriate timing that an airplane is performing a travelling operation, such as pushback, taxiing, takeoff, cruising, descent, landing, and the like, and to overcome the severe constraint on the communication output power.

Therefore, it is an object to provide a wireless device capable of appropriately switching a communication mode by detecting that the wireless device is not on an airplane that is currently in operation, and a logistics tracking system.

### SOLUTION TO THE PROBLEM

A wireless device according to an embodiment of the present disclosure is a mobile wireless device, including: a sensor unit configured to measure a displacement of the wireless device; a transmitter configured to transmit a signal including information related to the wireless device; a storage configured to pre-store a predetermined displacement condition and to store a displacement history of the displacement measured by the sensor unit; and a controller configured to control a communication mode of the transmitter based on the predetermined displacement condition and the displacement history stored in the storage, wherein the controller controls the communication mode of the transmitter to be either a low output power mode, for restricting a transmission output power of the transmitter for transmitting the signal to a predetermined value or lower, or a high output power mode, for increasing the transmission output power of the transmitter for transmitting the signal to be higher than the predetermined value, and when it is definitely determined that the wireless device is not loaded on an airplane based on the predetermined displacement condition and the displacement history, sets the communication mode of the transmitter to the high output power mode.

### ADVANTAGEOUS EFFECTS OF THE INVENTION

It is possible to provide a wireless device capable of appropriately switching a communication mode by detecting that the wireless device is not loaded on an airplane, and a logistics tracking system.

### BRIEF DESCRIPTION OF THE DRAWINGS

[FIG. 1] FIG. 1 is a diagram illustrating an example of a mode of use of a wireless device according to an embodiment.
[FIG. 2] FIG. 2 is a diagram illustrating an example of a mode of use of a wireless device according to an embodiment.
[FIG. 3] FIG. 3 is a diagram illustrating an example of a configuration of a logistics tracking system according to an embodiment.
[FIG. 4] FIG. 4 is a diagram illustrating an example of a configuration of a wireless device.
[FIG. 5] FIG. 5 is a flowchart illustrating an example of a process performed by a controller.

### DETAILED DESCRIPTION OF THE INVENTION

Hereinafter, embodiments to which a wireless device and a logistics tracking system of the present disclosure are applied will be described.

### <Embodiment>

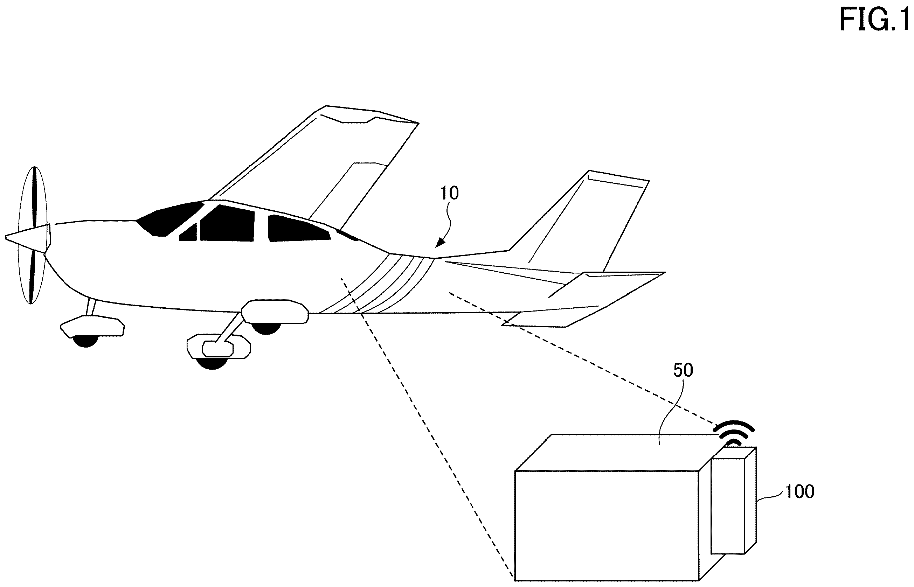

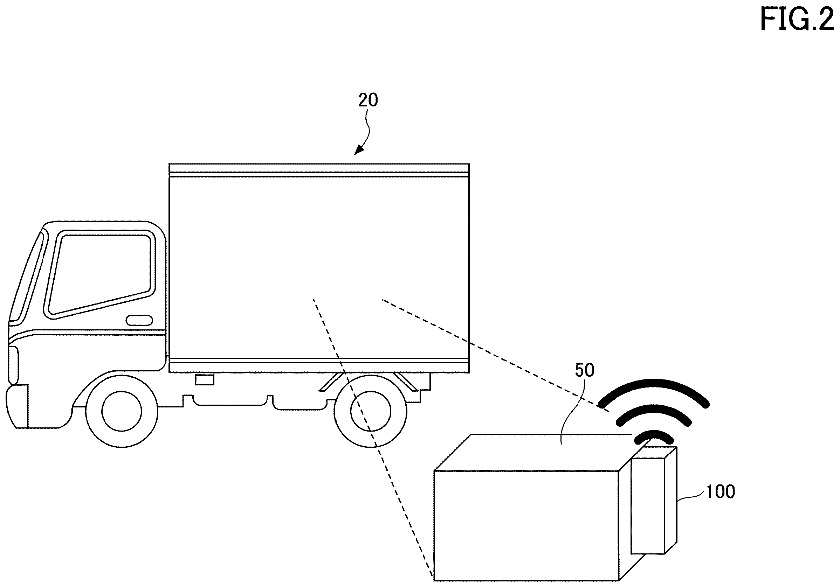

FIGS. 1 and 2 are views, each illustrating an example of a mode of use of a wireless device 100 of the embodiment. FIG. 1 illustrates a state in which an article 50 to which the wireless device 100 is attached is loaded on an airplane 10 and transported. FIG. 2 illustrates a state in which an article 50 to which the wireless device 100 is attached is loaded on a truck 20 and transported. The wireless device 100 is a mobile wireless device to be attached to the article 50 transported by the airplane 10 or the truck 20.

The wireless device 100 is, as an example, a device for transmitting a signal representing position information. The signal transmitted by the wireless device 100 is not limited to a signal representing position information. Here, as an example, an embodiment in which a signal representing position information is transmitted will be described.

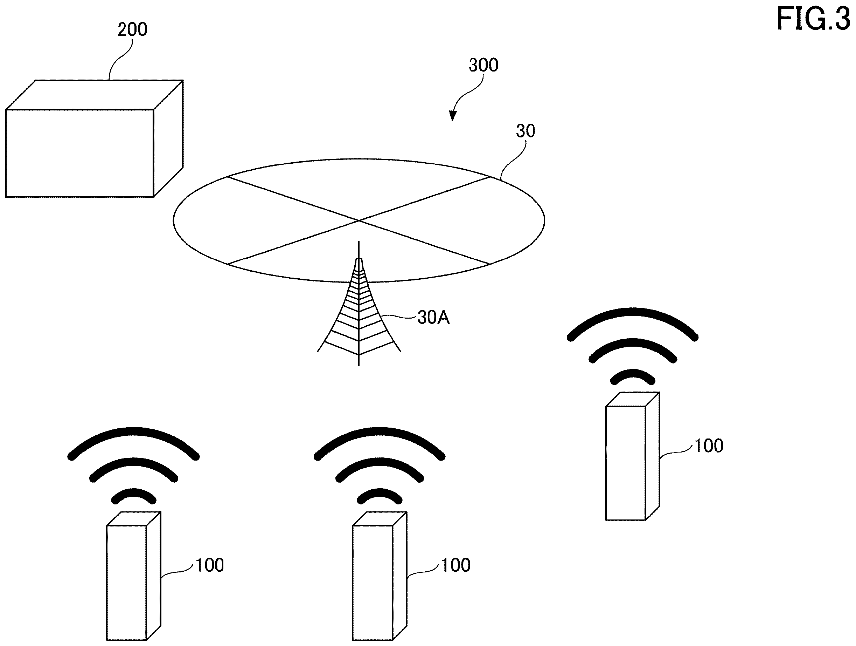

FIG. 3 is a diagram illustrating an example of the configuration of a logistics tracking system 300 of an embodiment. The logistics tracking system 300 includes the wireless device 100 and a server 200. The server 200 is an example of an information processing apparatus. The logistics tracking system 300 may include a plurality of wireless devices 100. The server 200 is capable of performing data communication with each wireless device 100 via a base station 30A through a network 30 formed by the base station 30A, and receives signals transmitted from each wireless device 100 and manages the position of each wireless device 100.

There are cases where the article 50 is transported by the airplane 10 as illustrated in FIG. 1, or is transported by the truck 20 as illustrated in FIG. 2. The article 50 may also be transported by ship. The transportation of the article 50 by the airplane 10 is air transportation. The transportation of the article 50 by the truck 20 is land transportation, and the transportation of the article 50 by ship is water transportation. Water transportation is transportation performed by a ship navigating a sea, a river, or the like.

The article 50 is transported to various places by air transportation, land transportation, or water transportation, and the wireless device 100 attached to the article 50 moves to these various places as well. The wireless device 100 outputs a signal representing position information at predetermined time intervals, at a predetermined timing, or the like. The logistics tracking system 300 receives a signal transmitted by each wireless device 100 and manages the whereabouts (position) of each article 50 to which each wireless device 100 is attached.

In a case of air transportation, various constraints are imposed on the transmission output power of the wireless device 100 for the sake of travelling safety of the airplane 10. Such constraints include, for example, compliance with RTCA DO160 Section 21 Category H, which requires that the transmission output power should be 20 Decibel-milliwatts (dBm) (100 mW) or lower. Therefore, during air transportation, the wireless device 100 switches to a low output power mode for restricting the transmission output power to 20 dBm or lower. A signal transmitted in the low output power mode of 20dBm or lower is at a level at which reception at the base station 30A may fail if the radio field intensity at the base station 30A is lower than a certain standard. That is, it is at a level at which reception at the base station 30A fails and the server 200 cannot receive the signal via the network 30.

When it is definitely determined that the wireless device 100 is not loaded on the airplane 10 and that the radio field intensity at the base station 30A is low, the wireless device switches to a high output power mode for increasing the transmission output power to a predetermined output power that is higher than 20 dBm. Signals transmitted by the wireless device 100 in the high output power mode are received by the server 200 via the network 30.

Under the most severe condition, the need to switch the wireless device 100 to the low output power mode arises when, for example, the article 50 to which the wireless device 100 is attached has been carried into the airplane 10 and the loading door has been closed in preparation for takeoff. Under the most severe condition, it is not until the loading door is opened upon arrival of the airplane 10 at its destination that it becomes possible to switch the wireless device 100 from the low output power mode to the high output power mode. That is, under the most severe condition, the wireless device 100 needs to be kept switched to the low output power mode from when the loading door is closed until when the loading door is opened, during which the airplane 10 performs travelling operations, such as pushback, taxiing, takeoff, cruising, descent, landing, and the like.

In the following description, a specific configuration of the wireless device 100, a control method for switching the communication mode to either the high output power mode or the low output power mode, and the like will be described. Instead of detecting that the wireless device is not on any airplane 10 that is currently travelling, the wireless device 100 performs a switching control based on the reverse concept of setting the communication mode to the high output power mode when: it is definitely determined that the wireless device 100 is not loaded on any airplane 10; and additionally, it is necessary to set the high output power mode. Therefore, the communication mode of the wireless device 100 is basically the low output power mode, and is switched to the high output power mode when it is definitely determined that the wireless device is not loaded on any airplane 10. For as long as the power is turned on, the wireless device 100 continuously transmits signals including information about the wireless device 100 at fixed time intervals in the low output power mode or the high output power mode.

### <Configuration of the wireless device 100>

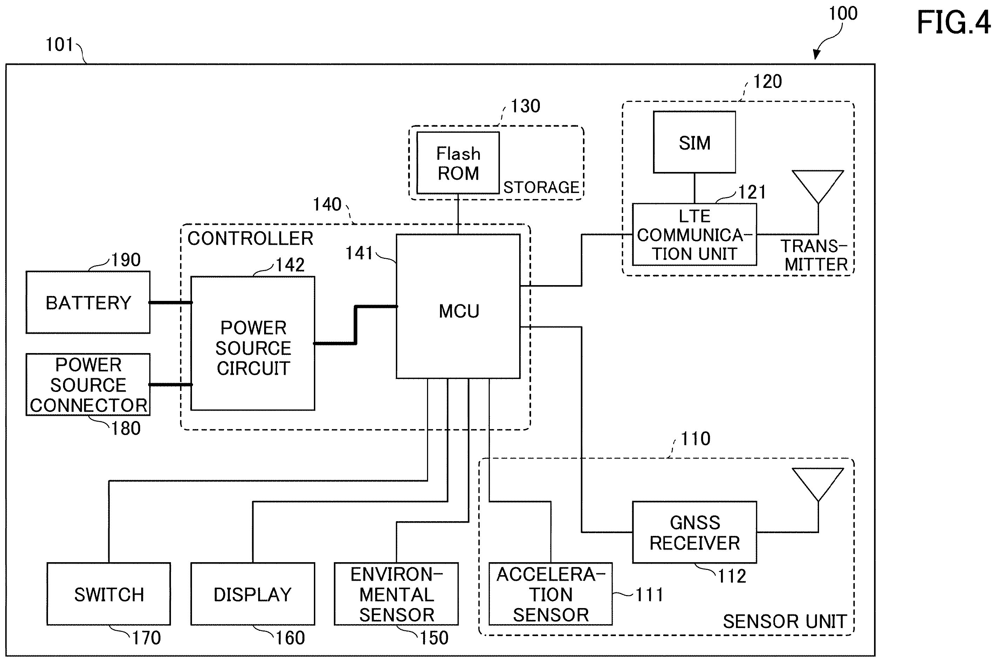

FIG. 4 is a diagram illustrating an example of the configuration of the wireless device 100. The wireless device 100 includes a housing 101, a sensor unit 110, a transmitter 120, a storage 130, a controller 140, an environmental sensor 150, a display 160, a switch 170, a power source connector 180, and a battery 190. The housing 101 is, as an example, a case made of resin, and houses the sensor unit 110, the transmitter 120, the storage 130, the controller 140, the environmental sensor 150, the display 160, the switch 170, the power source connector 180, and the battery 190. The display 160, the switch 170, and the power source connector 180 are partially exposed to the surface of the housing 101.

The sensor unit 110 is a sensor for measuring the displacement of the wireless device 100, and includes an acceleration sensor 111 and a Global Navigation Satellite System (GNSS) receiver 112. The GNSS receiver 112 is an example of a position detection sensor. The displacement of the wireless device 100 is, for example, a change in the acceleration, the speed, or the position of the wireless device 100.

The acceleration sensor 111 detects the acceleration accompanying a movement of the wireless device 100, and outputs it to a Micro Controller Unit (MCU) 141. The GNSS receiver 112 includes an antenna for receiving signals from GNSS satellites. The GNSS receiver 112 detects the position of the wireless device 100 based on the received signals, and outputs it to the MCU 141. The speed of the wireless device 100 may be determined based on the acceleration detected by the acceleration sensor 111 or the position detected by the GNSS receiver 112.

The transmitter 120 includes a Long Term Evolution (LTE) communication unit 121. The LTE communication unit 121 includes an antenna, and a SIM card is inserted into the LTE communication unit. The communication mode of the transmitter 120 is controlled by the MCU 141 and set to either the high output power mode or the low output power mode. The transmitter 120 transmits a signal including information about the wireless device 100. The information about the wireless device 100 may include displacement information representing a displacement of the wireless device 100 in addition to an Identifier (ID) of the wireless device 100. The displacement information may include position information representing a position detected by the GNSS receiver 112. The displacement information may also include information representing the acceleration or the speed of the wireless device 100 in addition to the position information. Instead of the LTE communication unit 121, a communication unit communicating by Fifth Generation (5G), Sixth Generation (6G), or the like may be used.

When the transmitter 120 is in the low output power mode, the transmission output power of the transmitter 120 for transmitting a signal when the wireless device 100 is loaded on the airplane is the same as that when the wireless device 100 is not loaded on any airplane. The wireless device 100 continuously transmits signals including information about the wireless device 100 at fixed time intervals while the power source is turned on. In the low output power mode, since no particular determination is made concerning whether the wireless device 100 is loaded on the airplane or the wireless device 100 is not loaded on any airplane, the transmission output power of the transmitter 120 for transmitting a signal when the wireless device 100 is loaded on the airplane is the same as that when the wireless device 100 is not loaded on any airplane.

The storage 130 pre-stores data representing a predetermined displacement condition, and stores a displacement measured by the sensor unit 110 as a displacement history. The predetermined displacement condition is, as an example, a condition concerning whether change over time in the displacement of the wireless device 100 indicates that the wireless device 100 is moving by land transportation or water transportation. More specifically, the condition concerning whether displacement of the wireless device 100 indicates that the wireless device 100 is moving by land transportation or water transportation includes at least one selected from (1) whether a displacement history of the wireless device 100 over a past first predetermined period of time falls within a pattern of moving and stopping by land transportation or water transportation, (2) whether a state, in which the moving speed of the wireless device 100 is lower than the minimum speed of the airplane 10 in flight, has continued for a second predetermined period of time or longer, and (3) whether a displacement history over a third predetermined period of time or longer falls within land transportation or water transportation. Here, as an example, an embodiment in which the condition concerning whether displacement of the wireless device 100 indicates that the wireless device 100 is moving by land transportation or water transportation includes all of (1) to (3) will be described.

Here, regarding the condition (1), the first predetermined period of time is, as an example, 6 hours. The moving means that the position of the wireless device 100 changes over time. The stopping means that the position of the wireless device 100 does not change over time. The pattern of moving and stopping by land transportation or water transportation is not a pattern of displacement that occurs in air transportation, but is a pattern of moving and stopping that may occur by land transportation or a pattern of change in the acceleration that may occur by water transportation. This is because, when a displacement history of the wireless device 100 over the past 6 hours falls within the pattern of moving and stopping by land transportation or water transportation, it is considered that the wireless device 100 is moving by land transportation or water transportation instead of air transportation.

Regarding the condition (2), in a case of, for example, a propeller-driven plane, the minimum speed of the airplane 10 in flight is, for example, 60 km/h, which is the takeoff speed, and the second predetermined period of time is, for example, 30 minutes. This is because, when moving at lower than 60 km/h has continued for 30 minutes or longer, it is considered that the wireless device 100 is moving by land transportation or water transportation instead of air transportation.

Regarding the condition (3), the third predetermined period of time is, for example, 15 minutes, and a displacement history over the past 15 minutes falling within land transportation or water transportation is, for example, a case where it can be considered that the wireless device is moving by land transportation because of having repeatedly performed 5 minutes of moving and 1 minute of stopping, a case where it can be inferred that the wireless device is moving by land transportation because the position information is following a route of an expressway even in a case of continuous moving at 60 km/h or higher, and the like. The same applies to the case of water transportation.

The predetermined displacement condition needs only to be a condition concerning whether displacement of the wireless device 100 indicates that the wireless device 100 is moving by land transportation or water transportation, and the above-described conditions (1) to (3) are merely examples. In particular, the value of the first predetermined period of time, the minimum speed of the airplane 10 in flight, the second predetermined period of time, or the third predetermined period of time can be appropriately changed depending on the region where the wireless device 100 is used, the type of the article 50, the type of the airplane 10, and the like. Further, since it is possible to determine that the wireless device 100 is moving by land transportation or water transportation by using at least one of the conditions (1) to (3), the determination may be performed using any one or two of the conditions (1) to (3).

The controller 140 includes the MCU 141 and a power source circuit 142. The MCU 141 is implemented by a computer including a Central Processing Unit (CPU), a Random Access Memory (RAM), a Read Only Memory (ROM), an input/output interface, an internal bus, and the like.

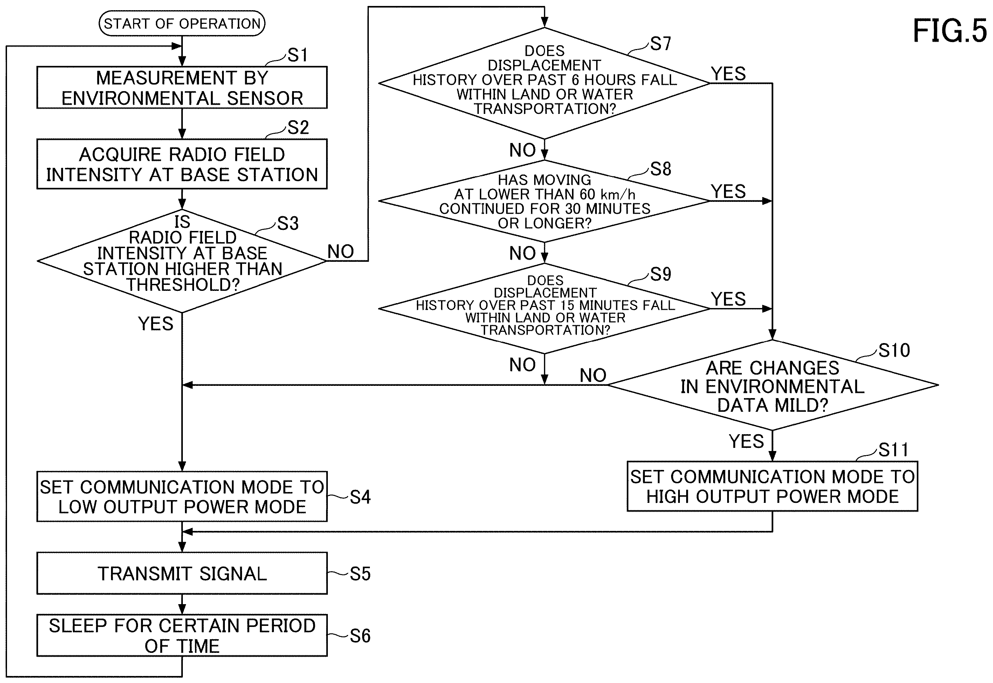

The MCU 141 sets the communication mode of the transmitter 120 to either the high output power mode or the low output power mode by comparing data representing a temporal change in the displacement represented by the predetermined displacement condition to data representing a temporal change in the displacement represented by the displacement history, based on the predetermined displacement condition and the displacement history stored in the storage 130. A specific setting method will be described later with reference to the flowchart of FIG. 5. The MCU 141 controls the entire wireless device 100. Specifically, the MCU 141 performs a process for storing an output from the sensor unit 110 in the storage 130, a process for transmitting a signal including information on the wireless device 100 via the transmitter 120, a process for reading data from the storage 130, a control for switching the communication mode of the transmitter 120 based on an output from the environmental sensor 150, a process for performing displaying on the display 160, switching on or off the wireless device 100 upon an operation on the switch 170, and the like.

The power source circuit 142 is a circuit for converting power supplied from the power source connector 180 or the battery 190 to have a voltage to be supplied to the MCU 141, and outputting the voltage with this value to the MCU 141.

The environmental sensor 150 is, for example, a sensor for detecting an environmental physical quantity such as humidity or atmospheric pressure. In flight by air transportation, the humidity and the atmospheric pressure decrease as the altitude increases. Therefore, it is possible to determine whether or not the wireless device is in air transportation by detecting an environmental physical quantity such as humidity or atmospheric pressure with the environmental sensor.

The display 160 is, for example, a liquid crystal display, and is connected to the MCU 141. The controller 140 displays information related to the operating status of the wireless device 100 on the display 160. For example, the display 160 may display the communication mode of the transmitter 120.

The switch 170 is a switch for switching on and off the power source of the wireless device 100, and is connected to the MCU 141.

The power source connector 180 is a connector that is connected to the power source circuit 142, and to which a power source cable for connecting the power source circuit 142 to a power supply source external to the wireless device 100 is connected. The wireless device 100 includes the battery 190, but can receive power supply from a power supply source external to the wireless device 100 by a power source cable being connected to the power source connector 180.

The battery 190 is a secondary battery connected to the power source circuit 142, and is repeatedly rechargeable. When the wireless device 100 is not receiving a power supply from an external power supply source via a power source cable connected to the power source connector 180, it uses the power from the battery 190.

The sensor unit 110 does not need to include the acceleration sensor 111. In this case, the speed and the acceleration may be detected based on changes in the position detected by the GNSS receiver 112. The sensor unit 110 does not need to include the GNSS receiver 112. In this case, the speed and the position may be determined based on the acceleration detected by the acceleration sensor 111.

The wireless device 100 does not need to include the environmental sensor 150. In this case, the wireless device 100 may perform the switching control of the communication mode of the transmitter 120 without using an environmental physical quantity. The wireless device 100 does not need to include the display 160.

### <Flowchart>

FIG. 5 is a flowchart illustrating an example of a process performed by the MCU 141.

Upon starting operating, the MCU 141 performs measurement with the environmental sensor 150 (step S1). The MCU 141 acquires an environmental physical quantity such as the temperature, the humidity, the atmospheric pressure, or the like detected by the environmental sensor 150.

The MCU 141 acquires the radio field intensity at the base station 30A via the LTE communication unit 121 (step S2).

The MCU 141 determines whether or not the radio field intensity at the base station 30A is higher than a threshold (step S3). The process of step S3 is a process for determining whether or not the wireless device 100 is being transported by land or water instead of being transported by air. Therefore, as an example, the threshold may be set to a maximum value that the wireless device 100 can receive on board on the airplane 10 that is currently travelling.

In a case where it is determined that the radio field intensity at the base station 30A is higher than the threshold (S3: YES), the MCU 141 sets the communication mode of the transmitter 120 to the low output power mode (step S4). The low output power mode is a communication mode in which the transmission output power of the transmitter 120 is set to a predetermined value of 100 mW or lower. When the radio field intensity at the base station 30A is higher than the threshold during land transportation or water transportation, the communication mode is set to the low output power mode because it is sufficiently possible to communicate with the base station 30A in the low output power mode.

The MCU 141 controls the transmitter 120 to transmit a signal including information relating to the wireless device 100 (step S5). The transmitter 120 transmits a signal including displacement information representing a displacement of the wireless device 100, in the transmission output power of the communication mode that is being set.

The MCU 141 enters a sleep mode for a certain period of time (step S6). When the MCU 141 completes the process of step S5, the flow returns to step S1.

In a case where it is determined in step S3 that the radio field intensity at the base station 30A is not higher than the threshold (S3: NO), the MCU 141 reads the displacement history from the storage 130 and determines whether or not the displacement history of the wireless device 100 over the past 6 hours falls within the pattern of moving and stopping by land transportation or water transportation (step S7). That is, the MCU 141 determines whether or not the condition (1) is satisfied. This is to determine whether or not the wireless device is moved by land transportation or water transportation even though the radio field intensity at the base station 30A is lower than the threshold.

Determining whether or not the displacement history of the wireless device 100 over the past 6 hours falls within the pattern of moving and stopping by land transportation or water transportation may be performed more specifically by performing the determination based on a comparison of data representing a displacement history, of the wireless device 100 over a past 6 hours, that indicates temporal change of the displacement in the pattern of moving and stopping by land transportation or water transportation, to data representing the temporal change of the displacement represented by the displacement history.

In a case where it is determined that the displacement history of the wireless device 100 over the past 6 hours does not fall within the pattern of moving and stopping by land transportation or water transportation (S7: NO), the MCU 141 determines whether or not moving at lower than 60 km/h has continued for 30 minutes or longer (step S8). This is because as long as moving at lower than 60 km/h has continued for 30 minutes or longer even though the radio field intensity at the base station 30A is lower than the threshold, it is considered that the wireless device 100 has moved by land transportation or water transportation instead of air transportation.

Determining whether or not moving at lower than 60 km/h has continued for 30 minutes or longer may be performed by determining whether or not the displacement history read from the storage 130 includes a state in which moving at lower than 60 km/h has continued for 30 minutes or longer, at the present time. As an example, whether or not moving at lower than 60 km/h continues for 30 minutes or longer may be determined by confirming the maximum speed and continuation of a moving state in the history of all displacement, acquired within a period of time of interest, that is read from the storage 130.

In a case where it is determined that moving at lower than 60 km/h has not continued for 30 minutes or longer (S8: NO), the MCU 141 determines whether or not the displacement history over the past 15 minutes falls within land transportation or water transportation (step S9). This is because, in the case where the displacement history over the past 15 minutes falls within land transportation or water transportation, it is considered that the wireless device 100 is moving not by air transportation but by land transportation or water transportation. Moreover, for example, this is because, if 5 minutes of moving and 1 minute of stopping are repeated, moving by land transportation is assumable even though the conditions of steps S7 and S8 are not satisfied, and because, even in a case of continuous moving at 60 km/h or higher, land transportation is assumable when the position information follows a route of an expressway. Regarding water transportation as well, this is because, there may also be a case where water transportation is assumable even though the conditions of steps S7 and S8 are not satisfied.

In a case where it is determined that the displacement history over the past 15 minutes does not fall within land transportation or water transportation (S9: NO), the MCU 141 moves the flow to step S4. In this case, since it is definitely determined that the wireless device is being transported by air, the MCU 141 sets the communication mode of the transmitter 120 to the low output power mode. Since the wireless device is being transported by air, the transmission output power is set to a predetermined value that is equal to or lower than 100 mW, which is subject to constraints related to air transportation. The wireless device being definitely determined to be being transported by air is synonymous with the wireless device being definitely determined to be loaded on the airplane 10.

Further, in a case where it is determined in step S7 that the displacement history of the wireless device 100 over the past 6 hours falls within the pattern of moving and stopping by land transportation or water transportation (S7: YES), the MCU 141 determines whether or not changes in the data (environmental data) representing the environmental physical quantity detected by the environmental sensor 150 are mild (step 10). Whether or not changes in the environmental data are mild may be determined by, as an example, whether or not the rate of temporal changes in the environmental data is equal to or less than a predetermined value. Step 10 is a process for determining whether or not the wireless device is being transported by land or water. Therefore, as an example, the predetermined value may be set to the maximum rate of temporal changes in the environmental data that can occur during land transportation or water transportation. This is because temporal changes in the environmental data are greater during air transportation than during land transportation or water transportation.

In a case where it is determined that the changes in the environmental data are mild (YES at step 10), the MCU 141 sets the communication mode of the transmitter 120 to the high output power mode (step 11). The high output power mode is a communication mode for setting the transmission output power of the transmitter 120 to a predetermined value exceeding 100 mW. Since it is definitely determined that the wireless device is being transported by land or water, the transmission output power is set to the predetermined value exceeding 100 mW, without being subject to constraints related to air transportation. The wireless device being definitely determined to be being transported by land or water is synonymous with the wireless device being definitely determined to not be loaded on the airplane 10. The predetermined value exceeding 100 mW is, for example, 23 dBm (200 mW), which is the maximum transmission output power of LTE cat. M1 and NB-IoT, which are LTE standards used in IoT devices.

Upon completing the process of step S11, the MCU 141 moves the flow to step S5. In step S5, the transmitter 120 transmits a signal including displacement information representing the displacement of the wireless device 100, at the transmission output power in the low output power mode.

In a case where it is determined in step S10 that the changes in the environmental data are not mild (step S10: NO), the MCU 141 moves the flow to step S4. In this case, since it is definitely determined that the wireless device is being transported by air, the MCU 141 sets the communication mode of the transmitter 120 to the low output power mode. The low output power mode is a communication mode for setting the transmission output power of the transmitter 120 to a predetermined value that is equal to or lower than 100 mW. The transmission output power is set to the predetermined value that is equal to or lower than 100 mW, which is subject to constraints related to air transportation because it is definitely determined that the wireless device is being transported by air. The wireless device being definitely determined to be being transported by air is synonymous with the wireless device being definitely determined to be on board on the airplane 10.

In a case where it is determined in step S8 that moving at lower than 60 km/h has continued for 30 minutes or longer (S8: YES), the MCU 141 moves the flow to step S10 to determine whether or not changes in the data (environmental data) representing the environmental physical quantity detected by the environmental sensor 150 are mild (step S10).

In a case where it is determined in step S9 that the wireless device 100 has been stopped for 15 minutes or longer (S9: YES), the MCU 141 moves the flow to step S10 to determine whether or not changes in the data (environmental data) representing the environmental physical quantity detected by the environmental sensor 150 are mild (step S10).

Although the flowchart illustrated in FIG. 5 includes three steps, namely steps S7, S8, and S9 in order to determine whether or not the wireless device 100 is moving by land transportation or water transportation, the flowchart needs only to include at least one of steps S7, S8, and S9. This is because it is possible to determine whether or not the wireless device 100 is moving by land transportation or water transportation by at least one of these steps. The communication mode may be set to the high output power mode (step 11) in a case where any one of S7, S8, and S9 results in a "YES" determination, without performing the determination in step 10.

### <Effect>

The wireless device 100, which is a mobile wireless device 100, includes: a sensor unit 110 configured to measure a displacement of the wireless device 100; a transmitter 120 configured to transmit a signal including information related to the wireless device 100; a storage 130 configured to pre-store a predetermined displacement condition and to store a displacement history of the displacement measured by the sensor unit 110; and a controller 140 configured to control a communication mode of the transmitter 120 based on the predetermined displacement condition and the displacement history stored in the storage 130, wherein the controller 140 controls the communication mode of the transmitter 120 to be either the low output power mode, for restricting the transmission output power of the transmitter 120 for transmitting the signal to a predetermined value or lower, or the high output power mode, for increasing the transmission output power of the transmitter 120 for transmitting the signal to be higher than a predetermined value, and when it is definitely determined that the wireless device 100 is not loaded on an airplane based on the predetermined displacement condition and the displacement history, sets the communication mode of the transmitter 120 to the high output power mode.

Instead of detecting that an airplane 10 is currently travelling, the wireless device 100 performs a switching control based on the reverse concept of setting the communication mode to the high output power mode when it is definitely determined that the wireless device 100 is not loaded on any airplane 10. Therefore, the communication mode of the wireless device 100 is basically the low output power mode, and is switched to the high output power mode when it is definitely determined that the wireless device is not loaded on any airplane 10.

Therefore, it is possible to provide the wireless device 100 capable of appropriately switching the communication mode by detecting that an airplane 10 is not currently travelling with the wireless device, and the logistics tracking system 300. Although it is very difficult to appropriately detect that an airplane 10 is currently travelling, it is relatively easy to detect that the wireless device 100 is not loaded on any airplane 10. Therefore, by basically maintaining the low output power mode and switching to the high output power mode when it is definitely determined that the wireless device is not loaded on any airplane 10, it is possible to switch the communication mode appropriately. Moreover, by detecting that the wireless device 100 is not loaded on any airplane 10, it is possible to satisfy both the assurance of communication stability and the constraints when loaded on an airplane.

Since the predetermined displacement condition is a condition concerning whether a displacement of the wireless device 100 indicates that the wireless device 100 is moving by land transportation or water transportation, it is possible to determine whether the wireless device 100 is moving by land transportation or water transportation. The wireless device 100 being moving by land transportation or water transportation means that the wireless device 100 is not on an airplane 10 that is currently travelling. Therefore, it is possible to provide the wireless device 100 capable of switching the communication mode appropriately by determining whether or not the wireless device 100 is moving by land transportation or water transportation to thereby detect that it is not on any airplane 10 that is currently travelling, and the logistics tracking system 300.

Further, the condition concerning whether a displacement of the wireless device 100 indicates that the wireless device 100 is moving by land transportation or water transportation includes at least one selected from (1) whether a displacement history of the wireless device 100 over the past first predetermined period of time (6 hours as an example) is included in the pattern of moving and stopping by land transportation or water transportation, (2) whether a state, in which the moving speed of the wireless device 100 is lower than the minimum speed of an airplane in flight (60 km/h as an example), has continued for the second predetermined period of time (30 minutes as an example) or longer, and whether the wireless device 100 has not been displaced over the third predetermined period of time (15 minutes as an example) or longer.

Therefore, it is possible to provide the wireless device 100 capable of more reliably determining whether the wireless device 100 is moving by land transportation or water transportation, and capable of appropriately switching the communication mode by detecting that the wireless device is not on an airplane 10 that is currently traveling, and the logistics tracking system 300.

When the radio field intensity at the base station 30A is high, the controller 140 sets the communication mode of the transmitter 120 to the low output power mode. When the radio field intensity at the base station 30A is high during land transportation or water transportation, it is sufficiently possible to communicate with the base station 30A in the low output power mode, and it is possible to secure the state in which communication with the base station 30A is possible while reducing power consumption. Even though the radio field intensity at the base station 30A is high, as long as the wireless device 100 is experiencing land transportation or water transportation, no problem occurs even in the high output power mode. However, also when the radio field intensity at the base station 30A is high, a case in which the wireless device 100 is loaded on any airplane 10 is assumable as well. Therefore, it is better to set the low output power mode to avoid risks.

Since the sensor unit 110 is the acceleration sensor 111 or the GNSS receiver 112, the acceleration, the speed, or the position associated with the moving of the wireless device 100 can be more reliably detected. Therefore, it is possible to provide the wireless device 100 capable of appropriately switching the communication mode by detecting that the wireless device is not on any airplane 10 currently travelling, based on the acceleration, the speed, or the position determined by the acceleration sensor 111 or the GNSS receiver 112, and the logistics tracking system 300.

When the transmitter 120 is in the low output power mode, the transmission output power of the transmitter 120 for transmitting a signal when the wireless device 100 is loaded on the airplane is the same as that when the wireless device 100 is not loaded on any airplane. Therefore, when the transmitter 120 is in the low output power mode, it is possible to transmit a signal including information related to the wireless device 100 stably regardless of whether or the wireless device 100 is loaded on any airplane.

### <Modified Example>

In the foregoing description, an embodiment in which the condition concerning whether a displacement of the wireless device 100 indicates that the wireless device 100 is moving by land transportation or water transportation is used as the predetermined displacement condition to be compared with the displacement history has been described. More specifically, the above-described conditions (1) to (3) have been used. However, the predetermined displacement condition may be a stop condition concerning whether or not the sensor unit 110 has measured a displacement indicating that the wireless device 100 has stopped moving after it measured a displacement indicating that the wireless device 100 was moving. In this case, when it is definitely determined that the wireless device 100 has stopped moving based on the stop condition and the displacement history, the controller 140 may switch the communication mode of the transmitter 120 from the low output power mode to the high output power mode.

Although the wireless device and the logistics tracking system according to exemplary embodiments of the present disclosure have been described above, the present disclosure is not limited to the specifically disclosed embodiments, and various modifications and changes are applicable without departing from the scope of the claims.

This international application claims priority based on Japanese Patent Application 2022-111370 filed July 11, 2022, the entire contents of which are incorporated herein by reference.

### REFERENCE SIGNS LIST

10 airplane
20 truck
50 article
100 wireless device
101 housing
110 sensor
111 acceleration sensor
112 GNSS receiver (an example of a position detection sensor)
120 transmitter
130 storage
140 controller
141 MCU
150 environmental sensor
160 display
170 switch
180 power source connector
190 battery
200 server (an example of an information processing apparatus)
300 logistics tracking system

## Claims

1. A mobile wireless device, comprising:
a sensor unit configured to measure a displacement of the wireless device;
a transmitter configured to transmit a signal including information related to the wireless device;
a storage configured to pre-store a predetermined displacement condition, and to store a displacement history of the displacement measured by the sensor unit; and
a controller configured to control a communication mode of the transmitter based on the predetermined displacement condition and the displacement history stored in the storage,
wherein the controller controls the communication mode of the transmitter to be either a low output power mode, for restricting a transmission output power of the transmitter for transmitting the signal to a predetermined value or lower, or a high output power mode, for increasing the transmission output power of the transmitter for transmitting the signal to be higher than the predetermined value, and when it is definitely determined that the wireless device is not loaded on an airplane based on the predetermined displacement condition and the displacement history, sets the communication mode of the transmitter to the high output power mode.

2. The wireless device according to claim **1,**
wherein the predetermined displacement condition is a condition concerning whether a displacement of the wireless device indicates that the wireless device is moving by land transportation or water transportation.

3. The wireless device according to claim **2,**
wherein the condition concerning whether the displacement of the wireless device indicates that the wireless device is moving by land transportation or water transportation includes at least one selected from: whether the displacement history of the wireless device over a past first predetermined period of time falls within a pattern of moving and stopping by land transportation or water transportation; whether a state, in which a moving speed of the wireless device is lower than a minimum speed of an airplane in flight, has continued for a second predetermined period of time or longer; and whether the displacement history over a third predetermined period of time or longer falls within land transportation or water transportation.

4. The wireless device according to claim **1,**
wherein the controller sets the communication mode of the transmitter to the low output power mode when a radio field intensity at a base station is high.

5. The wireless device according to any one of claims 1 to 4,
wherein the sensor unit is an acceleration sensor or a position detection sensor.

6. The wireless device according to claim 1,
wherein when the transmitter is in the low output power mode, the transmission output power of the transmitter for transmitting the signal when the wireless device is loaded on the airplane is same as that when the wireless device is not loaded on the airplane.

7. The wireless device according to claim 1,
wherein the predetermined displacement condition is a stop condition concerning whether the sensor unit has measured a displacement indicating that the wireless device has stopped moving, after measuring a displacement indicating the wireless device was moving, and
the controller switches the communication mode of the transmitter from the low output power mode to the high output power mode when it is definitely determined that the wireless device has stopped moving based on the stop condition and the displacement history.

8. A logistics tracking system, comprising:
the wireless device of claim 1; and
an information processing apparatus configured to receive the signal transmitted by the wireless device, and manage a position of an article to which the wireless device is attached.
